# FASCICULE DE BREVET EUROPEEN

(11) **EP 3 662 360 B1**
(45) Date de publication et mention de la délivrance du brevet: **07.06.2023**
(21) Numéro de dépôt: 18758925.4
(22) Date de dépôt: 20.07.2018
(51) Int. Cl.: G06F 3/01, G06F 3/16, G06F 3/0482, H04R 3/04, H04R 7/04, H04R 3/12

(54) **RESTITUTION SONORE PERFECTIONNÉE À PARTIR D'UN DISPOSITIF À ACTIONNEUR MÉCANIQUE VIBRANT**
VERBESSERTE TONWIEDERGABE VON EINER VORRICHTUNG MIT EINEM VIBRIERENDEN MECHANISCHEN AKTUATOR
IMPROVED SOUND PLAYBACK FROM A DEVICE WITH A VIBRATING MECHANICAL ACTUATOR

(30) Priorité: 01.08.2017 FR 1757383
(43) Date de publication de la demande: 10.06.2020
(73) Titulaire: HyVibe, 75009 Paris (FR)
(72) Inventeur: MAMOU-MANI, Adrien, 94300 Vincennes (FR)
(74) Mandataire: Plasseraud IP
(86) Numéro de dépôt international: PCT/FR2018/051874
(87) Numéro de publication internationale: WO 2019/025700

(56) Documents cités:
- WO-A1-97/12359
- WO-A1-2015/042879
- US-A1- 2015 268 753

## Description

L'invention concerne une restitution sonore d'un contenu multimédia à partir d'un dispositif de restitution comportant un actionneur appliquant une vibration à une structure rayonnante.

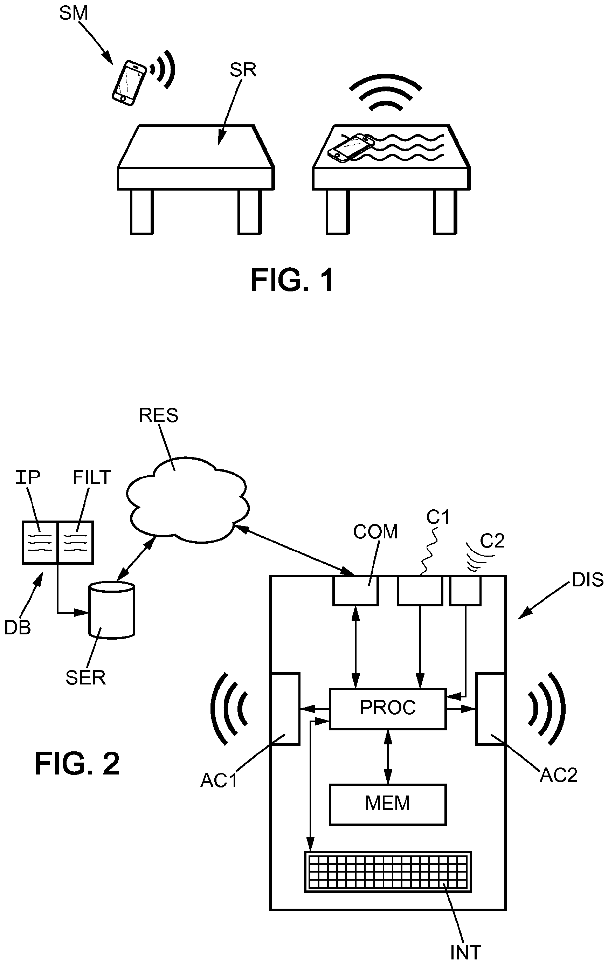

Le document WO 2915/042879 (A1) décrit des éléments de vibration pour améliorer la sortie audio d'un dispositif informatique. Le document US 2015/0268753 décrit un procédé pour modifier un signal source d'un support d'entrée tactile utilisé comme haut-parleur, lorsque le support d'entrée tactile est touché. Néanmoins ces documents ne décrivent pas des dispositifs de restitution sonore (connus notamment dans le document KR101265798 (B1) par exemple), qui peuvent se présenter sous la forme d'un terminal SM de type Smartphone par exemple et que l'on peut poser sur une structure acoustiquement rayonnante SR, telle que le plateau d'une table comme illustré sur la figure 1.

Un tel dispositif SM peut comporter par exemple :
- une mémoire stockant (durablement ou temporairement) des contenus sonores multimédia (musique, contenus issus d'émissions radios, ou autres),
- un processeur pour lire les données d'un contenu de la mémoire, et pour piloter un actionneur mécanique défini ci-dessous,
- un actionneur mécanique capable, en opération, d'appliquer une vibration contrôlée par le processeur à une surface en contact avec le dispositif SM.

Une telle réalisation est prometteuse pour se passer de mini haut-parleurs prévus habituellement sur les dispositifs de rendu multimédia, tels que des Smartphones, et d'utiliser toute structure rayonnante disponible (table, bureau, ou autre) pour produire un son amplifié issu de la vibration de la structure rayonnante.

Toutefois, cette réalisation est apparue comme nécessitant encore des perfectionnements, notamment en raison de la diversité des propriétés vibro-acoustiques des structures rayonnantes recevant les vibrations du dispositif SM. Typiquement, une table en verre et une table en bois ne résonnent pas de façon identique, avec par exemple des sons beaucoup plus filtrés et résonants pour le verre que pour le bois. De même, les dimensions (et/ou les géométries, en baffle ou non) des structures rayonnantes ont une influence sur leur résonnance. Par ailleurs, la position du dispositif SM sur une table par exemple (en coin de table ou au centre de la table) a aussi une influence sur la résonnance acoustique. Les dispositifs de l'état de l'art ne tiennent pas compte de telles différences et le son peut paraître dégradé en fonction de la structure rayonnante qui accueille le dispositif SM (par exemple sur un support en verre ou en métal, typiquement).

La présente invention vient améliorer cette situation.

Elle propose à cet effet, selon un premier aspect, un procédé de restitution d'un contenu sonore multimédia par vibration d'une structure rayonnante quelconque, la vibration de la structure rayonnante étant produite par contact avec un dispositif de restitution comportant au moins un actionneur mécanique agencé pour opérer une excitation vibratoire à la structure rayonnante lorsqu'elle est en contact avec le dispositif de restitution, à partir d'un signal source, correspondant à un signal sonore multimédia.

Plus particulièrement, le dispositif de restitution est défini dans les revendications.

Ainsi, il est proposé une correction du signal alimentant l'actionneur en fonction d'une mesure de la vibration captée par le capteur que comporte alors le dispositif selon l'invention, afin d'adapter la vibration qu'opère l'actionneur à tout type de structure rayonnante avec laquelle le dispositif est en contact.

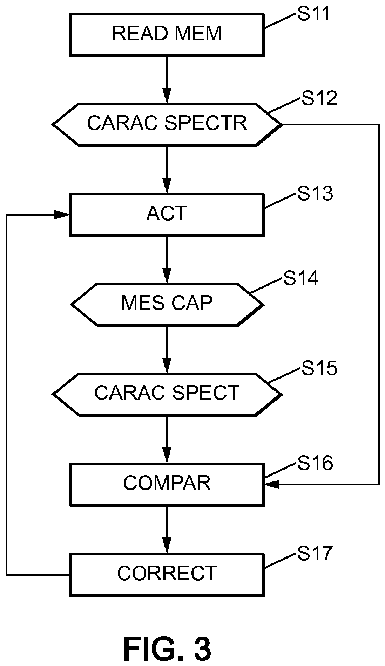

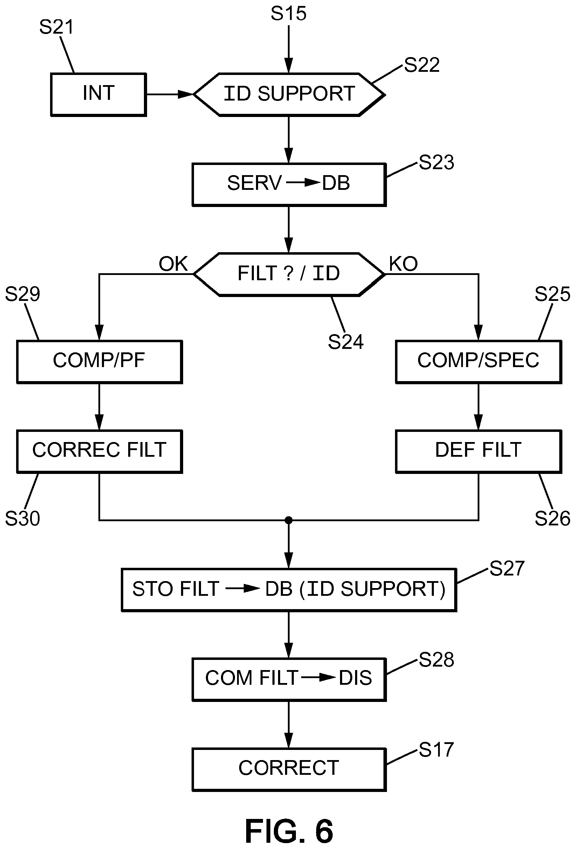

La présente invention vise aussi un programme informatique comportant des instructions pour la mise en oeuvre du procédé défini ci-avant, lorsque ce programme est exécuté par un processeur. L'algorithme général d'un tel programme informatique peut être illustré sur la figure 3 ou la figure 6 décrites plus loin. Les instructions de ce programme peuvent être stockées dans une mémoire du dispositif de restitution précité ou réparties entre ce dispositif et le serveur précité.

Selon encore un autre aspect, la présente invention vise aussi un tel dispositif de restitution d'un contenu sonore multimédia par vibration d'une structure rayonnante quelconque en contact avec le dispositif de restitution, ce dispositif de restitution étant défini dans les revendications.

La présente invention vise aussi un serveur d'un tel système comme défini dans les revendications.

D'autres avantages et caractéristiques de l'invention apparaitront à la lecture de la description d'exemples de réalisation présentés ci-après et à l'examen des dessins sur lesquels, outre la figure 1 présentée ci-avant :
- la figure 2 illustre schématiquement un dispositif de restitution selon un exemple de réalisation de l'invention,
- la figure 3 illustre schématiquement les étapes d'un procédé selon un exemple de réalisation de l'invention,
- la figure 4A illustre un exemple de réponse spectrale d'une structure rayonnante (ici une table basse en métal) présentant des pôles de vibration,
- la figure 4B illustre un exemple de réponse spectrale, corrigée, de cette structure rayonnante,
- la figure 5 compare la réponse spectrale d'une autre structure rayonnante (courbe en traits clairs), ici une boîte à chaussures, à la même réponse, corrigée (courbe en traits sombres),
- la figure 6 illustre schématiquement les étapes d'un procédé selon un exemple de réalisation faisant intervenir un serveur au sens de l'invention.

Le dispositif de restitution DIS de la figure 2 comporte un processeur PROC pouvant coopérer avec une mémoire MEM stockant au moins une partie des instructions du programme informatique au sens de l'invention. La mémoire MEM peut stocker en outre des données de contenu sonore multimédia, ainsi éventuellement que des données temporaires, de calcul opéré par le processeur, du type illustré sur la figure 3 commentée plus loin. Le dispositif DIS comporte en outre un ou plusieurs actionneurs mécaniques AC1 et AC2 (deux actionneurs dans l'exemple illustré pour une restitution à effet stéréophonique respectant par exemple le format des contenus). Ces actionneurs AC1, AC2, appliquent une vibration contrôlée à un support avec lequel le dispositif est en contact mécanique. Ces actionneurs transforment des surfaces quelconques en membrane de haut-parleur grâce à une transduction électromécanique. Les dispositifs de restitution comportant de tels actionneurs possèdent de nombreux avantages : ils sont petits, portatifs, et on obtient néanmoins des basses importantes grâce à la surface avec lesquels ils sont en contact.

Un type possible d'actionneur AC1 peut être par exemple celui commercialisé par la société Tectonic^{®} sous la référence de modèle TEAX25C10-8/HS. Le support peut être une table ou un bureau sur lesquels le dispositif DIS est simplement posé. Ainsi, le support forme une structure acoustiquement rayonnante, lorsqu'une vibration lui est appliquée par l'actionneur AC1, AC2. Plus généralement, un tel support peut être quelconque, et peut consister par exemple en une coque rigide de protection du dispositif DIS.

Le dispositif DIS au sens de l'invention comporte en outre un ou plusieurs capteurs C1, C2, dont l'un au moins est agencé pour capter une vibration acoustique produite par le support avec lequel le dispositif DIS est en contact, lorsque les actionneurs AC1, AC2 appliquent une vibration au support. Un tel capteur C1 peut être par exemple celui commercialisé par la société K&K^{®} sous la référence de modèle Hot Spot. L'autre capteur C2 peut être par exemple un microphone pour affiner le son de restitution (limiter des effets de réverbération d'une pièce dans laquelle le dispositif est utilisé, ou encore pour affiner une égalisation souhaitée par l'utilisateur du dispositif, ou autres).

Le dispositif de restitution DIS comporte en outre une interface de communication COM, avec un serveur SER, via un réseau de communication RES, dans une forme de réalisation décrite plus loin en référence à la figure 6. Comme on le verra dans cet exemple de réalisation de la figure 6, le serveur SER stocke dans une mémoire une base de données DB qui archive des données de filtres de correction FILT à appliquer au signal alimentant les actionneurs AC1, AC2, en fonction d'un identifiant ID de support formant une structure rayonnante (table, bureau, ou autre). En outre, le dispositif de restitution DIS peut comporter une interface de saisie INT (à disposition de l'utilisateur du dispositif) pour entrer un identifiant ID de support.

En référence maintenant la figure 3, une première étape S11 peut consister à lire la mémoire MEM notamment pour accéder à un contenu sonore choisi par l'utilisateur du dispositif. À l'étape S12, le processeur entame la lecture de ce contenu et identifie en particulier ses caractéristiques spectrales (amplitude sonore en fonction des fréquences acoustiques, par exemple de 30 à 16 000 Hz), sur une fenêtre temporelle de durée choisie.

A l'étape suivante S13, le processeur PROC pilote les actionneurs AC1, AC2 pour appliquer une vibration au support, lequel se comporte comme une structure rayonnante et émet ainsi un signal vibro-acoustique, mesuré par les capteurs C1, C2 à l'étape S14. Le processeur PROC estime alors les caractéristiques spectrales du signal vibro-acoustique émis par la structure rayonnante à l'étape S15 sur la durée choisie précitée, et compare ces caractéristiques du signal issu de la structure rayonnante, à celles du contenu (déterminées à l'étape S12).

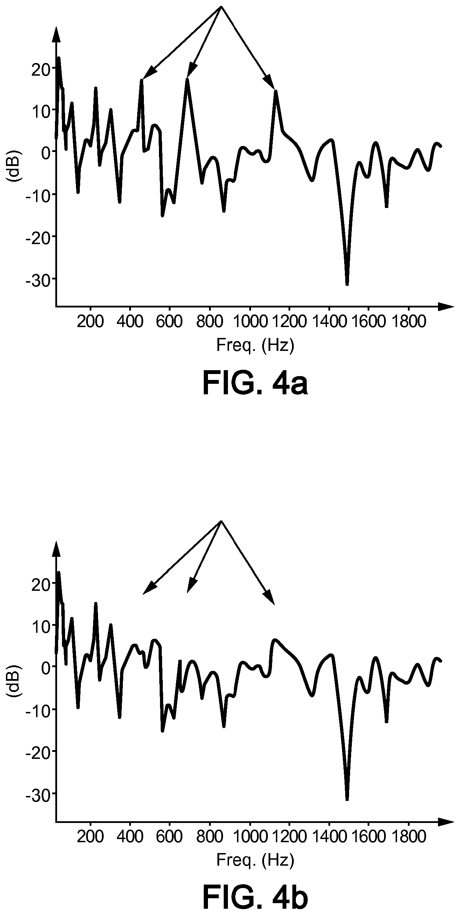

La figure 4A illustre un exemple de pôles de vibration d'une structure rayonnante correspondant ici à une table basse, en métal, et présentant typiquement des pôles à 450Hz, 700Hz et 1100Hz. Cette réponse fréquentielle de la structure rayonnante est issue de la comparaison entre le spectre du signal vibro-acoustique pendant la vibration des actionneurs AC1, AC2, et le spectre du signal source (correspondant au contenu sonore multimédia). Cette comparaison peut par exemple consister à diviser le spectre du signal vibratoire de la structure rayonnante par le spectre du signal source. On comprendra ainsi que la durée choisie précitée pour l'obtention de ces spectres est suffisamment longue par exemple pour ne pas retenir que la seule contribution fréquentielle du contenu dans le spectre du signal vibro-acoustique mesuré, mais surtout pour identifier des pôles vibro-acoustiques dans la réponse à la vibration de la structure rayonnante. Par exemple, le contenu sonore multimédia peut être de la musique (avec une fenêtre d'analyse de durée suffisamment longue pour obtenir toutes les fréquences dans le spectre du signal source), ou encore initialement un bruit blanc dans lequel toutes les fréquences acoustiques sont présentes en même temps. Toutefois, pour une ergonomie d'utilisation plus agréable, il peut être préférable de réaliser les étapes S 11 à S 16 sur la base du contenu sonore multimédia à restituer, l'affinage de la correction pouvant être progressif.

La correction elle-même, intervenant à l'étape S17 de la figure 3, peut consister à appliquer un filtre correcteur au signal source pour atténuer les pôles de vibration de la structure rayonnante. Le filtre correcteur, dans cette forme de réalisation est plus précisément un contrôleur par rétroaction (ou « feedback »). A titre d'exemple, un contrôleur par rétroaction de ce type peut être celui décrit dans le document FR 17 51403.

Plus généralement, ce filtre correcteur peut avoir pour effet de « lisser » les (dans le sens d'atténuer l'amplitude des) pics de fréquences correspondant aux pôles de vibration dans la réponse de la structure rayonnante, comme illustré sur la figure 4B, à comparer avec la figure 4A. Bien entendu, cette diminution d'amplitude peut être compensée par une augmentation d'amplitude (augmentation du gain) pour certaines fréquences, typiquement les fréquences moins bien représentées dans la réponse spectrale de la structure rayonnante, par exemple aux environs de 1500 Hz sur la figure 4A. Une telle réalisation permet de conserver une énergie spectrale moyenne homogène. À l'issue de cette correction de la réponse spectrale de la structure rayonnante, la réponse elle-même peut avoir des écarts en valeur absolue, entre amplitudes associées à différentes fréquences, qui restent inférieurs à un seuil choisi, par exemple 5 dB.

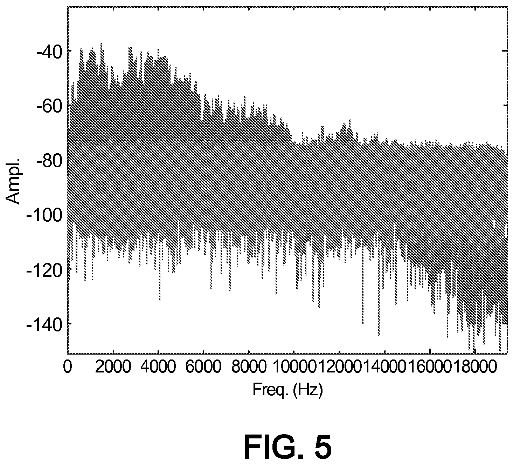

Ainsi par exemple, une telle correction a été effectuée sur le spectre de la figure 5 qui correspond, ici, à la réponse spectrale d'une boîte à chaussures (courbe en traits relativement clairs), ayant une forte représentation dans le domaine des basses fréquences du fait de l'effet de baffle associé à la géométrie de cette structure. La réponse spectrale, corrigée (courbe en traits relativement sombres), est plus plate en amplitude, comme présenté sur la figure 5.

C'est ainsi le filtre FILT qui peut corriger la réponse de la structure rayonnante (cette réponse ayant alors l'allure de la courbe en traits sombres de la figure 5) qui est finalement appliqué au signal alimentant les actionneurs AC1, AC2, pour minimiser l'effet des pôles de vibration de la structure rayonnante.

On se réfère maintenant la figure 6 illustrant un mode de réalisation dans lequel les étapes précitées peuvent être effectuées de façon répartie entre le dispositif de restitution DIS et un serveur distant SER, connecté au dispositif de restitution via son interface de communication COM. Dans une approche alternative à cette réalisation, toutes les étapes peuvent être menées par le dispositif de restitution DIS. Selon une première approche, les données du filtre correcteur FILT peuvent être déterminées à chaque utilisation du dispositif de restitution DIS. Toutefois, les calculs peuvent être lourds, et il peut être avantageux de stocker les données du filtre FILT dans une base de données (qui, dans une première forme de réalisation, peut être stocké dans la mémoire MEM du dispositif de restitution) pour éviter de réitérer systématiquement toutes les étapes précitées. Dans une telle réalisation, après le premier calcul de données du filtre FII,T pour un support donné (une table en particulier par exemple), une interface homme machine peut s'animer sur le dispositif de restitution et demander à l'utilisateur de saisir via l'interface de saisie INT un identifiant de ce support (par exemple : « table en bois #1 »). Ainsi, pour une utilisation ultérieure sur le même support, l'interface homme machine peut s'animer à nouveau pour demander à l'utilisateur d'entrer un identifiant de ce support, s'il est déjà connu. Le cas échéant, le dispositif peut retrouver dans sa base de données les données du filtre FILT correspondant à ce support « table en bois #1 ». Toutefois, il est préférable de recalculer un nouveau filtre correcteur FILT, au moins pour les raisons qui suivent :
- les propriétés vibro-acoustiques du support peuvent évoluer dans le temps, et
- les propriétés vibro-acoustiques de la structure rayonnante peuvent dépendre en outre de la position du dispositif sur le support (par exemple une position du dispositif sur un coin de table ne produit pas les mêmes caractéristiques vibro-acoustiques qu'une position du dispositif au centre de la table).

Ainsi, dans une réalisation exposée ci-après, il n'est pas stocké directement les données du filtre en correspondance d'un identifiant de support, mais plutôt des caractéristiques de la réponse de la structure rayonnante. Ces caractéristiques présentent par exemple des plages de fréquences dans lesquelles ont été identifiés des pôles de vibration de la structure rayonnante, lors d'une implémentation précédente du procédé illustré sur la figure 3.

Par exemple, il peut être stocké une plage de fréquence de plus ou moins 10% autour d'une fréquence de pôle de vibration, afin que la recherche d'un nouveau pôle de vibration de la structure rayonnante s'effectue dans cette plage. La recherche étant ainsi plus ciblée, les calculs sont moins longs et nécessitent moins de ressources auprès du dispositif de restitution DIS.

Toutefois, partant de cette observation, une forme de réalisation consiste à mutualiser les différentes mesures que peuvent effectuer des dispositifs de restitution DIS de même type et ainsi tenir la base de données DB non pas individuellement auprès de chaque dispositif de restitution, mais auprès d'un serveur commun SER pour un ensemble de dispositifs de restitution. Dans ce cas, un constructeur de meubles peut par exemple mettre à disposition des données de réponses spectrales de différents modèles de meubles proposés. Les données d'un modèle particulier peuvent être téléchargeables depuis un site Internet par exemple via l'interface de communication COM pour accélérer et faciliter l'obtention des pôles de vibration d'un support courant, de même modèle.

En référence ainsi à la figure 6, après l'étape S15 par exemple de la figure 3, le dispositif DIS peut interroger la base de données DB du serveur SER à l'étape S22, sur la base d'un identifiant de support entré par l'utilisateur à l'étape S21. Le serveur peut consulter sa base de données à l'étape S23 et en particulier déterminer, à l'étape S24, si des données de pôles de vibration (ou de filtre FILT plus généralement) ont déjà été déterminées pour cette identifiant ID.

Si tel est le cas (flèche OK en sortie du test S24), à l'étape S29, la comparaison des spectres du signal source et du signal mesuré par le(s) capteur(s) C1, C2 n'est effectuée que pour des plages de fréquences incluant les pôles de vibration du support courant, stockés dans la base de données. Le filtre correcteur à appliquer peut ainsi être déterminé sur cette base (ou plus généralement, le filtre correcteur précédent peut être lui-même corrigé avec les nouvelles données issues du capteur C1) à l'étape S30.

Si l'identifiant de support ID est absent de la base de données (flèche KO en sortie du test S24), la comparaison s'effectue sur tout le spectre acoustique à l'étape S25 et le filtre correcteur est estimé pour la première fois, pour ce support à l'étape S26.

Ensuite, à l'étape S27, les données du filtre correcteur (et notamment les données des pôles de vibration du support courant) peuvent être stockées dans la base de données DB :
- en remplacement des anciennes données si le filtre correctif avait déjà été déterminé conformément à l'étape S30 (tenant compte ainsi d'une évolution de ce support, dans sa fabrication, ou dans les matériaux utilisés), ou
- en tant que données relatives à un nouveau support.

Les données du filtre correcteur FILT, ainsi mis à jour, peuvent être transmises alors au dispositif de restitution DIS à l'étape S28, pour corriger le signal destiné à alimenter les actionneurs de ce dispositif AC1, AC2, conformément à l'étape S17 de la figure 3 précédemment décrite.

On décrit ci-après quelques détails de réalisation et avantages des mises en oeuvre exposées ci-dessus.

Déjà, la détermination d'un filtre correcteur individuel à chaque support se justifie comme suit.

Tout objet produisant un rayonnement acoustique peut être décrit par sa réponse en fréquence, fonction liant toute force l'excitant au son qu'il rayonne en un point de l'espace (sous hypothèse de linéarité). Un bon haut-parleur a ainsi une réponse en fréquence plate et il rayonne ainsi toutes les fréquences avec un même niveau sonore, rayonnant ainsi un signal fidèle à la source sonore. Or, les objets qui n'ont pas été conçus pour rayonner des sons n'ont pas de réponse en fréquence plate (comme illustré typiquement sur les figures 4A, 4B et 5). Lorsqu'ils sont excités par actionneur, de tels supports émettent des sons de moins bonne qualité qu'un haut-parleur.

On ajoute ainsi au moins un capteur pour corriger, comme présenté ci-dessus, la réponse en fréquence de l'objet rayonnant.

On peut prévoir une phase de calibration décomposée en :
- Mesure de la réponse en fréquence de l'objet avec un signal dédié (sinus glissant ou bruit blanc pour couvrir tous le spectre audio) ou directement avec la musique à émettre,
- Analyse de la réponse en fréquence, par exemple grâce aux algorithmes LPC (Codage Prédictif Linéaire), WLPC (Codage Prédictif Linéaire, Déformé pour « Warped ») ou RFP (pour « Rational Fraction Polynomials »),
- Envoi de ces données sur un serveur informatique distant et comparaison avec des données précédemment stockées (de pôles de vibration, notamment),
- Calcul de la compensation des défauts de la réponse en fréquence de la structure rayonnante (pour la cible choisie, calcul de filtres inverses et/ou placement de pôles modaux selon les cas).

Le but de cette phase de calibration est de neutraliser l'objet rayonnant et ainsi obtenir des sons fidèles aux signaux sources.

Les résultats de cette calibration sont envoyés depuis le serveur au processeur PROC du dispositif DIS (par exemple un DSP interne). Ensuite, il peut être procédé aux corrections de la réponse en fréquence du support vibrant, à partir du filtrage (adaptatif ou non) du signal d'entrée et/ou encore du contrôle par feedback des résonances du support vibrant.

L'utilisation d'un processeur approprié (type ARM Cortex M7 par exemple) permet un traitement temps-réel à latence faible avec une architecture hybride pour l'audio et le contrôle de vibration. Un ensemble de transducteurs (capteurs et actionneurs électromécaniques) positionnés pour sélectionner mécaniquement les résonances de la surface du support en contact permet d'appliquer un filtrage modal électromécanique efficace. Des algorithmes d'identification des paramètres vibratoires de la surface en contact, éventuellement partagés entre le dispositif de restitution et un serveur distant, contribuent à cette efficacité. Ces algorithmes contrôlent ainsi la vibration du support permettant de donner ainsi une qualité sonore cible. Le contenu de la base de données précitée DB peut être entretenu en outre grâce à la mise en oeuvre d'une plateforme d'échanges d'informations vibratoires et musicales liant l'utilisateur au fabricant du support dont la surface est en contact avec le dispositif.

La réalisation au sens de l'invention a été testée en quasi-temps réel sur la structure rayonnante (table en métal) dont la réponse spectrale est illustrée sur la figure 4A. A l'écoute initialement de musique et/ou de voix parlée, diffusées par la table en métal, on perçoit un son correct, mais avec certains défauts. La réponse en fréquence de l'objet montre plusieurs pics amplifiant le signal entrant d'environ 10 dB par rapport à la moyenne. Ces pics proviennent de modes de vibration, résonances de l'objet. L'analyse de cette réponse en fréquence par l'algorithme « Rational Fraction Polynomials » (RFP) permet d'identifier essentiellement trois modes de vibration. Leurs caractéristiques (fréquences, amortissements, amplitude) sont intégrées dans le processeur PROC dans lequel est implémenté un algorithme de contrôle modal dans l'espace d'état. Une augmentation de 400% des amortissements de ces trois modes fait disparaître ces trois modes (comme illustré sur la figure 4B). Appliqué à différentes sources sonores (musique rock, jazz, voix parlée radiophonique), le contrôle modal de ces trois modes a permis de faire disparaître les défauts principaux des sons rayonnés.

Relativement à l'exemple de la figure 5, à l'écoute de musique rayonnée par cet objet (ici une boîte à chaussures), on perçoit non plus des défauts localisés en fréquences, mais plutôt des larges zones amplifiées ou réduites. La réponse à un bruit blanc de l'objet est présentée en figure 5 (traits clairs). Il apparaît des variations de niveaux très importants (80 dB) avec de larges bandes d'amplification. Après analyse LPC à 1000 coefficients puis filtrage inverse issu de ces coefficients (compensation LPC), la réponse devient plate (traits sombres de la figure 5). Appliqué à un signal de musique, le son rayonné obtenu par cet objet a une qualité fidèle au signal source.

Bien entendu, la présente invention ne se limite pas aux formes de réalisation décrites ci-avant à titre d'exemple ; elle s'étend à d'autres variantes.

Ainsi par exemple, on a décrit ci-avant le stockage de données de pôles vibratoires d'une structure (lorsque de tels paramètres sont mesurables). Bien entendu, le stockage et l'archivage dans une base de données de tout autre paramètre caractérisant la réponse spectrale d'une structure rayonnante sont envisageables, comme notamment les coefficients LPC d'une analyse précédente portant sur une structure rayonnante en baffle comme décrit ci-avant en référence à la figure 5.

## Revendications

1. Procédé de restitution d'un contenu sonore multimédia par vibration d'une structure rayonnante (SR) quelconque, la vibration de la structure rayonnante étant produite par contact avec un dispositif de restitution (DIS), posé sur la structure rayonnante, comportant :
- au moins un actionneur mécanique (AC1, AC2) agencé pour opérer une excitation vibratoire à la structure rayonnante lorsqu'elle est en contact avec le dispositif de restitution, à partir d'un signal source, correspondant à un signal sonore multimédia,
**caractérisé en ce que**, le dispositif de restitution comportant en outre au moins un capteu (C1, C2) agencé pour capter au moins un signal issu de la vibration de la structure rayonnante, le procédé comporte les étapes :
* alimenter l'actionneur avec un signal source ayant des composantes en fréquences vibro-acoustiques connues,
* recevoir du capteur un signal de vibration de la structure rayonnante opérée par l'actionneur, pour obtenir, par comparaison entre le signal de vibration en fréquences, vibro-acoustique, reçu du capteur et les composantes en fréquences vibro-acoustiques du signal source, une réponse en fréquences, vibro-acoustique, de la structure rayonnante,
* corriger le signal source destiné à alimenter l'actionneur, en appliquant un filtre correcteur de la réponse en fréquences, vibro-acoustique, de la structure rayonnante tel que la réponse en fréquences, vibro-acoustique, de la structure rayonnante, corrigée par le filtre correcteur, comporte une amplitude associée à chaque fréquence telle que la différence en valeur absolue entre l'amplitude associée à une fréquence courante et une amplitude moyenne sur l'ensemble des fréquences soit inférieure à un seuil choisi,
* et alimenter l'actionneur avec le signal source ainsi corrigé,
dans lequel la correction du signal source, destiné à alimenter l'actionneur, comporte :
- une identification en fréquences de pôles de vibration dans la réponse en fréquences, vibro-acoustique, de la structure rayonnante, et
- une élaboration du filtre correctif à appliquer au signal source pour atténuer une amplitude du signal source au moins aux fréquences des pôles de vibration de la structure rayonnante, relativement à d'autres fréquences,
dans lequel, le dispositif de restitution comportant une interface d'entrée d'un identifiant de la structure rayonnante, des données relatives à la réponse en fréquences, vibro-acoustique, de la structure rayonnante sont stockées en mémoire, dans une base de données en correspondance de l'identifiant de la structure rayonnante,
dans lequel lesdites données stockées dans la base de données comportent au moins des données de fréquences de pôles de vibration de la structure rayonnante et l'identification en fréquences de pôles de vibration de la structure rayonnante comporte :
- une première recherche dans la base de données, à partir de l'identifiant de structure rayonnante, de données relatives à des fréquences préalables de pôles de vibration de la structure rayonnante, précédemment stockées dans la base de données, et
- si la première recherche est positive, une recherche de fréquences courantes de pôles de vibration de la structure rayonnante dans des plages de fréquences incluant lesdites fréquences préalables de pôles de vibration.

2. Procédé selon la revendication 1, dans lequel le seuil choisi est inférieur ou égal à 5dB.

3. Procédé selon l'une des revendications précédentes, dans lequel, le dispositif de restitution comportant en outre une interface de communication avec un serveur distant, le procédé comporte :
- une transmission opérée par le dispositif de restitution, à destination du serveur distant, de données du signal de vibration de la structure rayonnante reçu par le capteur, avec des données de composantes en fréquences vibro-acoustiques du signal source,
- la détermination de la réponse en fréquences, vibro-acoustique, de la structure rayonnante, opérée par le serveur,
- l'élaboration par le serveur du filtre correcteur pour corriger le signal source destiné à alimenter l'actionneur, et
- une transmission, opérée par le serveur, du filtre correcteur à l'interface de communication de dispositif de restitution, pour corriger le signal source auprès du dispositif de restitution.

4. Procédé selon la revendication 3 dans lequel ladite base de données est stockée en mémoire auprès du serveur.

5. Programme informatique comportant des instructions pour la mise en oeuvre du procédé selon l'une des revendications 1 à 4, lorsque ce programme est exécuté par un processeur.

6. Dispositif de restitution d'un contenu sonore multimédia par vibration d'une structure rayonnante quelconque en contact avec le dispositif de restitution, le dispositif de restitution, posé sur la structure rayonnante, comportant :
- au moins un actionneur mécanique (AC1, AC2) agencé pour opérer une excitation vibratoire à la structure rayonnante à partir d'un signal source, correspondant à un signal sonore multimédia,
**caractérisé en ce qu'**il comporte en outre :
- au moins un capteur (C1, C2) agencé pour capter au moins un signal issu d'une vibration de la structure rayonnante, et
- un processeur agencé pour :
* piloter l'alimentation de l'actionneur avec un signal source ayant des composantes en fréquences vibro-acoustiques connues,
* recevoir du capteur un signal de vibration de la structure rayonnante opérée par l'actionneur, pour obtenir, par comparaison entre le signal de vibration en fréquences, vibro-acoustique, reçu du capteur et les composantes en fréquences vibro-acoustiques du signal source, une réponse en fréquences, vibro-acoustique, de la structure rayonnante,
* corriger le signal source destiné à alimenter l'actionneur, en appliquant un filtre correcteur de la réponse en fréquences, vibro-acoustique, de la structure rayonnante tel que la réponse en fréquences, vibro-acoustique, de la structure rayonnante, corrigée par le filtre correcteur, comporte une amplitude associée à chaque fréquence telle que la différence en valeur absolue entre l'amplitude associée à une fréquence courante et une amplitude moyenne sur l'ensemble des fréquences soit inférieure à un seuil choisi,
* et piloter l'alimentation de l'actionneur avec le signal source ainsi corrigé, dans lequel la correction du signal source, destiné à alimenter l'actionneur, comporte :
- une identification en fréquences de pôles de vibration dans la réponse en fréquences, vibro-acoustique, de la structure rayonnante, et
- une élaboration du filtre correctif à appliquer au signal source pour atténuer une amplitude du signal source au moins aux fréquences des pôles de vibration de la structure rayonnante, relativement à d'autres fréquences,
dans lequel, le dispositif de restitution comportant une interface d'entrée d'un identifiant de la structure rayonnante, des données relatives à la réponse en fréquences, vibro-acoustique, de la structure rayonnante sont stockées en mémoire, dans une base de données en correspondance de l'identifiant de la structure rayonnante,
dans lequel lesdites données stockées dans la base de données comportent au moins des données de fréquences de pôles de vibration de la structure rayonnante et l'identification en fréquences de pôles de vibration de la structure rayonnante comporte :
- une première recherche dans la base de données, à partir de l'identifiant de structure rayonnante, de données relatives à des fréquences préalables de pôles de vibration de la structure rayonnante, précédemment stockées dans la base de données, et
- si la première recherche est positive, une recherche de fréquences courantes de pôles de vibration de la structure rayonnante dans des plages de fréquences incluant lesdites fréquences préalables de pôles de vibration.

7. Système comportant :
- un dispositif de restitution selon la revendication 6, et
- un serveur (SER) apte à communiquer avec le dispositif de restitution et équipé d'un processeur pour :
* recevoir du dispositif de restitution des données du signal de vibration de la structure rayonnante reçu par le capteur du dispositif de restitution, avec des données de composantes en fréquences vibro-acoustiques du signal source,
* déterminer la réponse en fréquences, vibro-acoustique, de la structure rayonnante,
* élaborer un filtre correcteur pour corriger le signal source destiné à alimenter l'actionneur, et
* transmettre le filtre correcteur au dispositif de restitution, pour corriger le signal source auprès du dispositif de restitution.

8. Serveur d'un système selon la revendication 7, comportant un processeur pour :
* recevoir du dispositif de restitution des données du signal de vibration de la structure rayonnante reçu par le capteur du dispositif de restitution, avec des données de composantes en fréquences vibro-acoustiques du signal source,
* déterminer la réponse en fréquences, vibro-acoustique, de la structure rayonnante,
* élaborer un filtre correcteur pour corriger le signal source destiné à alimenter l'actionneur, et
* transmettre le filtre correcteur au dispositif de restitution, pour corriger le signal source auprès du dispositif de restitution.

## Patentansprüche

1. Verfahren zur Wiedergabe eines multimedialen Toninhalts durch Vibration einer beliebigen strahlenden Struktur (SR), wobei die Vibration der strahlenden Struktur durch Kontakt mit einer an der strahlenden Struktur angeordneten Wiedergabevorrichtung (DIS) erzeugt wird, die aufweist:
- mindestens einen mechanischen Aktuator (AC1, AC2), der konfiguriert ist, um ausgehend von einem Quellensignal, das einem multimedialen Tonsignal entspricht, eine vibratorische Erregung der strahlenden Struktur, wenn sie in Kontakt mit der Wiedergabevorrichtung ist, zu bewirken,
**dadurch gekennzeichnet, dass**, wobei die Wiedergabevorrichtung ferner mindestens einen Sensor (C1, C2) aufweist, der konfiguriert ist, mindestens ein von der Vibration der strahlenden Struktur herrührendes Signal zu erfassen, wobei das Verfahren die folgenden Schritte aufweist:
* Speisen des Aktuators mit einem Quellensignal, das bekannte vibro-akustische Frequenzkomponenten hat,
* Empfangen eines Vibrationssignals der von dem Aktuator betätigten strahlenden Struktur aus dem Sensor, um durch Vergleich zwischen dem aus dem Sensor empfangenen vibro-akustischen Vibrationsfrequenzsignal und den vibro-akustischen Frequenzkomponenten des Quellensignals eine vibro-akustische Frequenzantwort der strahlenden Struktur zu bekommen,
* Korrigieren des zum Speisen des Aktuators vorgesehenen Quellensignals durch Anwenden eines Korrekturfilters der vibro-akustischen Frequenzantwort der strahlenden Struktur, derart, dass die mit dem Korrekturfilter korrigierte vibro-akustische Frequenzantwort der strahlenden Struktur eine mit jeder Frequenz assoziierte Amplitude aufweist, derart, dass die Absolutwert-Differenz zwischen der mit einer aktuellen Frequenz assoziierten Amplitude und einer durchschnittlichen Amplitude über die Gesamtheit der Frequenzen kleiner als eine gewählte Schwelle ist,
* und Speisen des Aktuators mit dem auf diese Weise korrigierten Quellensignal,
wobei die Korrektur des zum Speisen des Aktuators vorgesehenen Quellensignals aufweist:
- eine frequenzbezogene Identifikation von Vibrationspolen in der vibro-akustischen Frequenzantwort der strahlenden Struktur, und
- ein Erarbeiten des auf das Quellensignal anzuwendenden Korrekturfilters, um eine Amplitude des Quellensignals zumindest bei den Vibrationspolfrequenzen der strahlenden Struktur relativ zu anderen Frequenzen zu dämpfen,
in welchem Verfahren, wobei die Wiedergabevorrichtung eine Eingabeschnittstelle zum Eingeben eines Identifikators der strahlenden Struktur aufweist, Daten, die sich auf die vibro-akustische Frequenzantwort der strahlenden Struktur beziehen, in einer Datenbank in Entsprechung mit dem Identifikator der strahlenden Struktur gespeichert werden,
in welchem Verfahren die in der Datenbank gespeicherten Daten zumindest Daten von Vibrationspolfrequenzen der strahlenden Struktur aufweisen, und die frequenzbezogene Identifikation von Vibrationspolen der strahlenden Struktur aufweist:
- ausgehend von dem Identifikator der strahlenden Struktur eine erste Suche in der Datenbank nach Daten, die sich auf vorherige Vibrationspolfrequenzen der strahlenden Struktur beziehen und vorausgehend in der Datenbank gespeichert worden sind, und
- wenn die erste Suche positiv ist, eine Suche nach aktuellen Vibrationspolfrequenzen der strahlenden Struktur in Frequenzbereichen, in denen die vorherigen Vibrationspolfrequenzen enthalten sind.

2. Verfahren nach Anspruch 1, in welchem die gewählte Schwelle kleiner oder gleich 5dB ist.

3. Verfahren nach einem der vorausgehenden Ansprüche, wobei die Wiedergabevorrichtung ferner eine Kommunikationsschnittstelle mit einem Remote-Server aufweist, in welchem das Verfahren aufweist:
- ein von der Wiedergabevorrichtung durchgeführtes Senden von Daten des von dem Sensor erfassten Vibrationssignals der strahlenden Struktur, einschließlich Daten von vibro-akustischen Frequenzkomponenten des Quellensignals, hin zu dem Remote-Server,
- die von dem Server durchgeführte Bestimmung der vibro-akustischen Frequenzantwort der strahlenden Struktur,
- das Erarbeiten des Korrekturfilters, um das zum Speisen des Aktuators vorgesehene Quellensignal zu korrigieren, durch den Server, und
- ein von dem Server durchgeführtes Senden des Korrekturfilters zu der Kommunikationsschnittstelle der Wiedergabevorrichtung, um das Quellensignal an der Wiedergabevorrichtung zu korrigieren.

4. Verfahren nach Anspruch 3, in welchem die Datenbank auf dem Server gespeichert ist.

5. Computerprogramm aufweisend Befehle zum Durchführen des Verfahrens nach einem der Ansprüche 1 bis 4, wenn dieses Programm von einem Prozessor ausgeführt wird.

6. Wiedergabevorrichtung zur Wiedergabe eines multimedialen Toninhalts durch Vibration einer beliebigen strahlenden Struktur in Kontakt mit der Wiedergabevorrichtung, wobei die an der strahlenden Struktur angeordnete Wiedergabevorrichtung aufweist:
- mindestens einen mechanischen Aktuator (AC1, AC2), der konfiguriert ist, um ausgehend von einem Quellensignal, das einem multimedialen Tonsignal entspricht, eine vibratorische Erregung der strahlenden Struktur, wenn sie in Kontakt mit der Wiedergabevorrichtung ist, zu bewirken,
**dadurch gekennzeichnet, dass** die Wiedergabevorrichtung ferner aufweist:
- mindestens einen Sensor (C1, C2) der konfiguriert ist, mindestens ein von einer Vibration der strahlenden Struktur herrührendes Signal zu erfassen, und
- einen Prozessor, der konfiguriert ist, um:
* das Speisen des Aktuators mit einem Quellensignal, das bekannte vibro-akustische Frequenzkomponenten hat, zu steuern,
* aus dem Sensor ein Vibrationssignal der von dem Aktuator betätigten strahlenden Struktur zu empfangen, um durch Vergleich zwischen dem aus dem Sensor empfangenen vibro-akustischen Vibrationsfrequenzsignal und den vibro-akustischen Frequenzkomponenten des Quellensignals eine vibro-akustische Frequenzantwort der strahlenden Struktur zu bekommen,
* das zum Speisen des Aktuators vorgesehene Quellensignal durch Anwenden eines Korrekturfilters der vibro-akustischen Frequenzantwort der strahlenden Struktur zu korrigieren, derart, dass die mit dem Korrekturfilter korrigierte vibro-akustische Frequenzantwort der strahlenden Struktur eine mit jeder Frequenz assoziierte Amplitude aufweist, derart, dass die Absolutwert-Differenz zwischen der mit einer aktuellen Frequenz assoziierten Amplitude und einer durchschnittlichen Amplitude über die Gesamtheit der Frequenzen kleiner als eine gewählte Schwelle ist,
* und das Speisen des Aktuators mit dem auf diese Weise korrigierten Quellensignal zu steuern,
in welcher Vorrichtung die Korrektur des zum Speisen des Aktuators vorgesehenen Quellensignals aufweist:
- eine frequenzbezogene Identifikation von Vibrationspolen in der vibro-akustischen Frequenzantwort der strahlenden Struktur, und
- ein Erarbeiten des auf das Quellensignal anzuwendenden Korrekturfilters, um eine Amplitude des Quellensignals zumindest bei den Vibrationspolfrequenzen der strahlenden Struktur relativ zu anderen Frequenzen zu dämpfen,
in welcher Vorrichtung, wobei die Wiedergabevorrichtung eine Eingabeschnittstelle zum Eingeben eines Identifikators der strahlenden Struktur aufweist, Daten, die sich auf die vibro-akustische Frequenzantwort der strahlenden Struktur beziehen, in einer Datenbank in Entsprechung mit dem Identifikator der strahlenden Struktur gespeichert sind,
in welcher Vorrichtung die in der Datenbank gespeicherten Daten zumindest Daten von Vibrationspolfrequenzen der strahlenden Struktur aufweisen, und die frequenzbezogene Identifikation von Vibrationspolen der strahlenden Struktur aufweist:
- ausgehend von dem Identifikator der strahlenden Struktur eine erste Suche in der Datenbank nach Daten, die sich auf vorherige Vibrationspolfrequenzen der strahlenden Struktur beziehen und vorausgehend in der Datenbank gespeichert worden sind, und
- wenn die erste Suche positiv ist, eine Suche nach aktuellen Vibrationspolfrequenzen der strahlenden Struktur in Frequenzbereichen, die die vorherigen Vibrationspolfrequenzen enthalten.

7. System aufweisend:
- eine Wiedergabevorrichtung nach Anspruch 6, und
- einen Server (SER), der fähig ist, mit der Wiedergabevorrichtung zu kommunizieren und mit einem Prozessor ausgestattet ist, um
* Daten des von dem Sensor der Wiedergabevorrichtung empfangenen Vibrationssignals der strahlenden Struktur, einschließlich Daten von vibro-akustischen Frequenzkomponenten des Quellensignals, aus der Wiedergabevorrichtung zu empfangen,
* die vibro-akustische Frequenzantwort der strahlenden Struktur zu bestimmen,
* ein Korrekturfilter zu erarbeiten, um das zum Speisen des Aktuators vorgesehene Quellensignal zu korrigieren, und
* das Korrekturfilter zu der Wiedergabevorrichtung zu senden, um das Quellensignal an der Wiedergabevorrichtung zu korrigieren.

8. Server eines Systems nach Anspruch 7, aufweisend einen Prozessor, um:
* Daten des von dem Sensor der Wiedergabevorrichtung empfangenen Vibrationssignals der strahlenden Struktur, einschließlich Daten von vibro-akustischen Frequenzkomponenten des Quellensignals, aus der Wiedergabevorrichtung zu empfangen,
* die vibro-akustische Frequenzantwort der strahlenden Struktur zu bestimmen,
* ein Korrekturfilter zu erarbeiten, um das zum Speisen des Aktuators vorgesehene Quellensignal zu korrigieren, und
* das Korrekturfilter zu der Wiedergabevorrichtung zu senden, um das Quellensignal an der Wiedergabevorrichtung zu korrigieren.

## Claims

1. A method for reproducing a multimedia sound content by vibration of a movable radiating structure (SR), wherein the vibration of the radiating structure is generated by contact with a reproducing device (DIS) disposed on the radiating structure, the reproducing device (DIS) comprising:
- at least one mechanical actuator (AC1, AC2) configured to cause vibratory excitation of the radiating structure when in contact with the playback device, based on a source signal corresponding to a multimedia audio signal,
**characterized in that** the playback device further comprises at least one sensor (C1, C2) configured to detect at least one signal resulting from the vibration of the radiating structure, the method comprising the steps of:
* feeding the actuator with a source signal having known vibro-acoustic frequency components,
* receiving a vibration signal of the radiating structure actuated by the actuator from the sensor to obtain a vibro-acoustic frequency response of the radiating structure by comparison between the vibro-acoustic vibration frequency signal received from the sensor and the vibro-acoustic frequency components of the source signal,
* correcting the source signal intended for feeding the actuator by applying a correction filter to the vibro-acoustic frequency response of the radiating structure such that the vibro-acoustic frequency response of the radiating structure corrected by the correction filter has an amplitude associated with each frequency such that the absolute value difference between the amplitude associated with a current frequency and an average amplitude over the totality of frequencies is less than a selected threshold,
* and feeding the actuator with the source signal thus corrected,
wherein the correction of the source signal intended to feed the actuator comprises:
- a frequency-related identification of vibration poles in the vibro-acoustic frequency response of the radiating structure, and
- elaborating the correction filter to be applied to the source signal to attenuate an amplitude of the source signal at least at the vibration pole frequencies of the radiating structure relative to other frequencies,
wherein the playback device having an input interface for inputting an identifier of the radiating structure, data relating to the vibro-acoustic frequency response of the radiating structure is stored in a database in correspondence with the identifier of the radiating structure,
wherein the reproducing device having an input interface for inputting an identifier of the radiating structure, data relating to the vibro-acoustic frequency response of the radiating structure is stored in a database in correspondence with the identifier of the radiating structure,
wherein the data stored in the database comprises at least data of vibrational pole frequencies of the radiating structure, and the frequency-related identification of vibrational poles of the radiating structure comprises:
- starting from the identifier of the radiating structure, a first search in the database for data relating to previous vibrational pole frequencies of the radiating structure and previously stored in the database, and
- if the first search is positive, a search for current vibration pole frequencies of the radiating structure in frequency ranges in which the previous vibration pole frequencies are included.

2. The method according to claim 1, wherein the selected threshold is less than or equal to 5dB.

3. The method according to any one of the preceding claims, wherein the playback device further comprises a communication interface with a remote server, in which the method comprises
- sending, performed by the playback device, data of the vibration signal of the radiating structure detected by the sensor, including data of vibro-acoustic frequency components of the source signal, to the remote server,
- determining the vibro-acoustic frequency component of the radiating structure performed by the server,
- the server elaborating the correction filter to correct the source signal intended to feed the actuator, and
- transmitting, by the server, the correction filter to the communication interface of the playback device to correct the source signal at the playback device.

4. The method according to claim 3, in which the database is stored on the server.

5. A computer program comprising instructions for performing the method of any one of claims 1 to 4, when said program is executed by a processor.

6. A device for reproducing a multimedia sound content by vibratory excitation of any radiating structure in contact with the reproducing device, the reproducing device being disposed on the radiating structure, comprising:
- at least one mechanical actuator (AC1, AC2) configured to cause vibratory excitation of the radiating structure when in contact with the playback device, based on a source signal corresponding to a multimedia audio signal,
**characterized in that** the playback device further comprises:
- at least one sensor (C1, C2) configured to detect at least one signal resulting from a vibration of the radiating structure, and
- a processor configured to:
* control the feeding of the actuator with a source signal having known vibro-acoustic frequency components,
* receive from the sensor a vibration signal of the radiating structure actuated by the actuator to obtain a vibro-acoustic frequency response of the radiating structure by comparison between the vibro-acoustic vibration frequency signal received from the sensor and the vibro-acoustic frequency components of the source signal,
* correcting the source signal intended for feeding the actuator by applying a correction filter to the vibro-acoustic frequency response of the radiating structure such that the vibro-acoustic frequency response of the radiating structure corrected by the correction filter has an amplitude associated with each frequency such that the absolute value difference between the amplitude associated with a current frequency and an average amplitude over the entirety of the frequencies is less than a selected threshold,
* and to control the feeding of the actuator with the source signal thus corrected,
Wherein the correction of the source signal intended for feeding the actuator comprises:
- a frequency-related identification of vibration poles in the vibro-acoustic frequency response of the radiating structure, and
- devising the correction filter to be applied to the source signal to attenuate an amplitude of the source signal relative to other frequencies at least at the vibration pole frequencies of the radiating structure,
wherein, the reproduction apparatus having an input interface for inputting an identifier of the radiating structure, data relating to the vibro-acoustic frequency response of the radiating structure is stored in a database in correspondence with the identifier of the radiating structure,
wherein the data stored in the database comprises at least data of vibrational pole frequencies of the radiating structure, and the frequency-related identification of vibrational poles of the radiating structure comprises:
- starting from the identifier of the radiating structure, a first search in the database for data relating to previous vibrational pole frequencies of the radiating structure and previously stored in the database, and
- if the first search is positive, a search for current vibrational pole frequencies of the radiating structure in frequency ranges containing the previous vibrational pole frequencies.

7. A system comprising:
- a playback device according to claim 6, and
- a server (SER) capable of communicating with the playback device and provided with a processor to:
* receive from the playback device data of the vibration signal of the radiating structure received by the sensor of the playback device, including data of vibro-acoustic frequency components of the source signal,
* determine the vibro-acoustic frequency response of the radiating structure,
* devising a correction filter to correct the source signal intended to drive the actuator, and
* sending the correction filter to the playback device to correct the source signal at the playback device.

8. a server of a system according to claim 7, comprising a processor to:
* receive from the playback device data of the vibrational signal of the radiating structure received from the sensor of the playback device, including data of vibro-acoustic frequency components of the source signal,
* determine the vibro-acoustic frequency response of the radiating structure,
* devising a correction filter to correct the source signal intended to drive the actuator, and
* transmitting the correction filter to the playback device to correct the source signal at the playback device.
